(19) Europäisches Patentamt
European Patent Office
Office européen des brevets

(11) **EP 1 568 575 B1**

(12) **EUROPÄISCHE PATENTSCHRIFT**

(45) Veröffentlichungstag und Bekanntmachung des Hinweises auf die Patenterteilung:
**02.01.2008 Patentblatt 2008/01**

(51) Int Cl.:
***B62D 5/04*** *(2006.01)*

(21) Anmeldenummer: **05001778.9**

(22) Anmeldetag: **28.01.2005**

(54) **Verfahren zum Betrieb eines Lenksystems mit Konfiguration von Nutzanwendungen**

Method of operation of a steering system with configuration of operational modes

Procédé de commande d'un système de direction avec configuration de modes d'opération

(84) Benannte Vertragsstaaten:
**DE FR GB IT SE**

(30) Priorität: **28.02.2004 DE 102004009821**

(43) Veröffentlichungstag der Anmeldung:
**31.08.2005 Patentblatt 2005/35**

(73) Patentinhaber: **ZF Lenksysteme GmbH
73527 Schwäbisch Gmünd (DE)**

(72) Erfinder:
• **Reinelt, Wolfgang
70374 Stuttgart (DE)**
• **Schuster, Wolfgang
73453 Abstgmünd (DE)**
• **Klier, Willy
73527 Schwäbisch Gmünd (DE)**
• **Grossheim, Reinhard
73560 Böbingen (DE)**

(56) Entgegenhaltungen:
**EP-A- 0 531 870      EP-A- 0 872 406
EP-A- 1 188 640      EP-A- 1 236 638
DE-A1- 10 157 666**

**Beschreibung**

Die Erfindung betrifft ein Verfahren zum Betrieb eines Lenksystems gemäß dem Oberbegriff von Anspruch 1.

Ein gattungsgemäßes Verfahren ist aus der DE 197 51 125 A1 bekannt. Dabei werden die vom Fahrer durch ein Lenkrad aufgebrachten Lenkbewegungen, der durch einen Sensor erfasste Lenkradwinkel, mittels eines Überlagerungsgetriebe mit den Bewegungen des Stellantriebes, dem Motorwinkel, überlagert. Die so entstandene überlagerte Bewegung wird über das Lenkgetriebe bzw. das Lenkgestänge an die lenkbar ausgelegten Räder zur Einstellung des Lenkwinkels weitergeleitet. Hierbei ist der Stellantrieb als Elektromotor ausgelegt. Das Funktionsprinzip bzw. die Nutzanwendungen eines solchen Servolenksystems bestehen insbesondere darin, dass die Lenkung durch die Übersetzung des Überlagerungsgetriebes indirekt ausgeführt werden kann und damit geringe Lenkradmomente erreicht werden können. Dadurch bedingte, sehr große Lenkradwinkel werden vermieden, indem geeignete Motorwinkel überlagert werden, so dass mit Lenkradwinkeln üblicher Größe erforderliche Ausgangswinkel eingestellt werden können. Der zur Lenkunterstützung erforderliche Motorwinkel bzw. sein Sollwert wird aus dem Lenkradwinkel bestimmt. Darüber hinaus kann der Motorwinkel auch abhängig sein von Signalen welche die durch Sensoren und/oder andere Fahrzeugsysteme, wie z. B. ein elektronisches Stabilitätsprogramm (ESP) erfassten Fahrzeugbewegungen repräsentieren. Dies erfolgt durch ein Steuergerät, auf welchem die für die Bestimmung der erforderlichen Motorwinkel bzw. die für die Steuerung der Nutzanwendungen erforderlichen Programme ausgeführt werden.

Aufgrund der Sicherheitsanforderungen an ein derartiges Lenksystem, ist ein Sicherheitskonzept mit Sicherheits- und Diagnosefunktionen, insbesondere um zufällige Fehler in der Sensorik, dem Steuergerät selbst oder der Aktuatorik zu entdecken und geeignet zu reagieren, d. h. beispielsweise die Nutzanwendungen, insbesondere die variable Lenkübersetzung geeignet zu schalten und/oder entsprechende Ersatzmodi zu starten, unerlässlich. Die Eingangssignale des Steuergeräts werden auf Plausibilität geprüft. Beispielsweise wäre es nachteilig ein verfälschtes Geschwindigkeitssignal zu akzeptieren, da die variable Lenkübersetzung geschwindigkeitsabhängig variiert wird.

Der vorliegenden Erfindung liegt daher die Aufgabe zugrunde, ein Verfahren zum Betrieb eines Lenksystems, der eingangs erwähnten Art zu schaffen, welches eine hohe Sicherheit durch zuverlässiges Schalten der Nutzanwendungen gewährleistet.

Erfindungsgemäß wird diese Aufgabe durch den kennzeichnenden Teil von Anspruch 1 gelöst.

Durch diese Maßnahmen wird das erfindungsgemäße Verfahren zum Betrieb eines Lenksystems in vorteilhafter Weise erweitert. Dabei wird die Plausibilität der Eingabedaten des Steuergeräts mittels geeigneter Sicherheitsfunktionen laufend überwacht und aufgrund der Überwachung die Nutzanwendungen (z. B. die variable Lenkübersetzung) konfiguriert also entsprechend geschaltet. Demzufolge wird sowohl eine Rückfallebene der Nutzanwendungen (Lenkassistenzfunktionen) bei fehlerhaften Eingangssignalen als auch ein Wiedereintritt in deren normale Betriebsmodi (alle Eingänge können wieder verwendet werden) geschaffen. Insbesondere wird dadurch die Verfügbarkeit des Lenksystems erhöht.

Vorteilhaft ist es, wenn zur Konfiguration der Nutzanwendungen Ersatzmodi und Umschaltbedingungen vorgegeben werden.

Falls beispielsweise keine verlässlichen Daten hinsichtlich der Geschwindigkeit des Kraftfahrzeugs existieren, also demnach eine Umschaltbedingung gegeben ist, müssen geeignete Ersatzmodi für die variable Lenkübersetzung geschaltet werden. Da insbesondere bei höheren Geschwindigkeiten ein zu niedriges Lenkradmoment oder eine zu direkte Übersetzung nachteilig sein kann (z. B. bei der Autobahnfahrt).

Die Vorgabe der Ersatzmodi und Umschaltbedingungen werden in vorteilhafter Weise durch ein Statusmaschine implementiert.

Als Nutzanwendung kommt eine variable Lenkübersetzung in Betracht. Des weiteren sind selbstverständlich auch andere Nutzanwendungen denkbar.

In einer verfahrensgemäßen Ausgestaltung der Erfindung kann ferner vorgesehen sein, dass die variable Lenkübersetzung wenigstens anhand der Eingabedaten Lenkradwinkel, Ritzelwinkel und Fahrzeuggeschwindigkeit konfiguriert wird.

Somit sind die wesentlichen sicherheitsrelevanten Eingangsdaten der variablen Lenkübersetzung in die Konfiguration miteinbezogen, wodurch eine hohe Sicherheit erzielt wird.

Vorteilhaft ist, wenn bei Vorliegen eines fehlerhaften Eingangssignals ein vordefiniertes stetiges Ersatzsignal verwendet wird und/oder bei erneut plausibel gewordenem Eingangssignal auf dieses wieder stetig umgeschaltet wird.

Unstetigkeiten bei den einzustellenden Soll-Motorwinkeln können dadurch vermieden werden. Sichere vordefinierte Ersatzsignale werden für die fehlerhaften Signale stetig bzw. glatt angefahren und andersherum werden bei erneuter Plausibilität der aktuellen Eingangssignale, diese ebenfalls erneut glatt angefahren. Dazu könnten im Vorfeld stetige Sollwerte für die Motorregelung erzeugt werden, auf welche dann entsprechend zurückgegriffen wird.

Nachfolgend ist anhand der Zeichnung ein Ausführungsbeispiel der Erfindung prinzipmäßig beschrieben.

Es zeigen:

Fig. 1 und 2     ein Schema des Lenksystems nach dem Stand der Technik, von dem die Erfindung im Ausführungsbeispiel ausgeht; und

Fig. 3 ein Schema einer Statusmaschine zur Konfiguration einer variablen Lenkübersetzung.

Im folgenden soll die Erfindung anhand eines Ausführungsbeispiels dargestellt werden. Dabei wird beispielhaft von einer eingangs erwähnten Überlagerungslenkung ausgegangen.

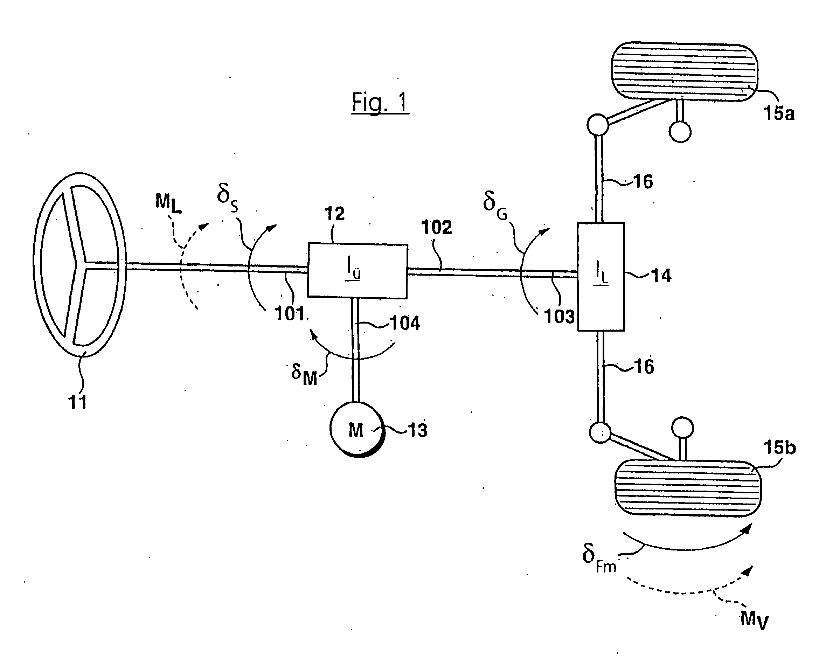

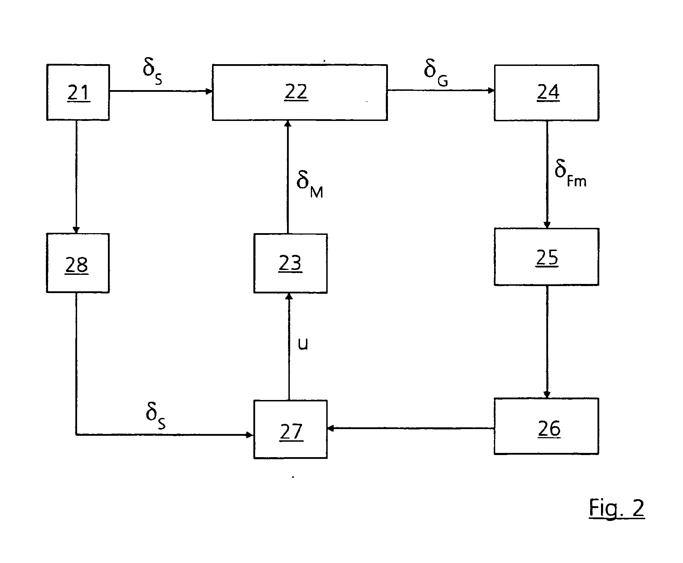

Die Fig. 1 bzw. Fig. 2 zeigt mit den Bezugszeichen 11 bzw. 21 ein von dem Fahrer des Fahrzeugs betätigbares Lenkrad. Durch die Betätigung des Lenkrades 11 bzw. 21 wird einem Überlagerungsgetriebe 12 bzw. 22 über eine Verbindung 101 ein Lenkradwinkel $\delta_S$ zugeführt. Gleichzeitig wird dem Überlagerungsgetriebe 12 bzw. 22 über eine Verbindung 104 ein Motorwinkel $\delta_M$ eines Stellantriebes 13 bzw. 23 zugeleitet, wobei der Stellantrieb als Elektromotor ausgebildet sein kann. Ausgangsseitig des Überlagerungsgetriebes 12 bzw. 22 wird die überlagerte Bewegung bzw. der Ritzelwinkel $\delta_G$ über eine Verbindung 102, 103 einem Lenkgetriebe 14 bzw. 24 zugeführt, das wiederum über ein Lenkgestänge 16 entsprechend der überlagerten Bewegung bzw. dem Gesamtwinkel $\delta_G$ lenkbare Räder 15a und 15b mit einem Lenkwinkel $\delta_{Fm}$ beaufschlagt. Die mechanische Übersetzung des Überlagerungsgetriebes 12 bzw. 22 für $\delta_M$ = 0 ist mit $i_Ü = \delta_G/\delta_S$ und die mechanische Übersetzung des Lenkgetriebes 14 bzw. 24 mit dem Bezugszeichen $i_L$ bezeichnet.

Auf die lenkbar ausgelegten Räder 15a und 15b wirkt ein von der Straße beeinflusstes Reaktionsmoment $M_V$. In der Fig. 2 sind weiterhin Sensoren 26 und 28 zu sehen, wobei der Sensor 28 den Lenkradwinkel $\delta_S$ detektiert und einem Steuergerät 27 zuführt, während mit dem Bezugszeichen 26 Sensoren gekennzeichnet sind, die die Bewegungen des Fahrzeugs (bspw. Gierbewegungen, Querbeschleunigung, Raddrehzahlen, Fahrzeuggeschwindigkeit $V_X$, usw.) detektieren und entsprechende Signale dem Steuergerät 27 zuführen. Das Steuergerät 27 ermittelt, abhängig vom erfassten Lenkradwinkel $\delta_S$ und ggf. abhängig von den Fahrzeugbewegungen eine Stellgröße u zur Ansteuerung des Stellantriebs 13 bzw. 23 zur Realisierung von Nutzanwendungen (z. B. variable Lenkübersetzung). Die Signale der Sensoren 26 können auch einem CAN-Bussystem des Fahrzeugs entnommen werden.

Zwischen den in den Fig. 1 bzw. 2 dargestellten Winkeln und Drehmomenten gelten die bekannten Zusammenhänge ($i_L()$ ist eine nichtlineare Funktion):

$$i_L(\delta_{Fm}) = [\delta_S/i_Ü + \delta_M] \quad (1)$$

und

$$M_L = M_V/(i_L * i_Ü) \quad (2)$$

Eine Servolenkfunktion wird durch das in den Fig. 1 und 2 gezeigte Lenksystem dadurch erreicht, dass durch eine große Gesamtübersetzung ($i_L*i_Ü$), d. h. durch eine sehr indirekte Lenkung, das Lenkradmoment $M_L$ reduziert wird. Dem Lenkradwinkel $\delta_S$ wird ein Motorwinkel $\delta_M$ nach der o. g. Gleichung 1 überlagert, so dass ein gewünschter Vorderradwinkel $\delta_{Fm}$ mit einem nicht zu großen Lenkradwinkel $\delta_S$ eingestellt werden kann. Dabei können durch eine geeignete Ansteuerung des Motors Zusammenhänge zwischen dem Lenkradwinkel $\delta_S$ und dem Lenkwinkel $\delta_{Fm}$ realisiert werden, die auch vom Fahrzustand, beispielsweise der Fahrzeuggeschwindigkeit $V_X$ oder dem Lenkradwinkel $\delta_S$, abhängen können.

Nach der o. g. Gleichung 2 ist das Lenkradmoment $M_L$ nur von dem Reaktionsmoment $M_V$ an den lenkbaren Rädern abhängig und somit durch den Motoreingriff nicht beeinflussbar. Hierdurch ergibt sich das schon erwähnte Problem, dass durch die Wahl eines konstanten Übersetzungsverhältnisses des Lenkgetriebes kein für alle Fahrzustände akzeptables Lenkradmoment bzw. Lenkgefühl erreicht werden kann. Insbesondere darf das Lenkradmoment $M_L$ bei großen Lenkwinkeln im Stand nicht zu groß werden, während es bei Fahrten mit hoher Geschwindigkeit nicht zu klein werden darf.

Aufgrund der dadurch bedingten Sicherheitsanforderungen an das Lenksystem, ist ein Sicherheitskonzept mit Sicherheits- und Diagnosefunktionen, insbesondere, um zufällige Fehler in der Sensoren 26, 28, dem Steuergerät 27 selbst oder der Aktuatorik zu entdecken und geeignet zu reagieren, d. h. beispielsweise die Nutzanwendungen, insbesondere die variable Lenkübersetzung geeignet zu schalten und/oder entsprechende Ersatzmodi zu starten, unerlässlich. Die Eingangssignale des Steuergeräts 27, insbesondere $\delta_S$ und die fahrzeugspezifischen Daten der Sensoren 26, werden auf Plausibilität geprüft. Beispielsweise wäre es nachteilig, ein falsches Geschwindigkeitssignal $V_X$ des Fahrzeugs zu akzeptieren, da die variable Lenkübersetzung geschwindigkeitsabhängig variiert wird.

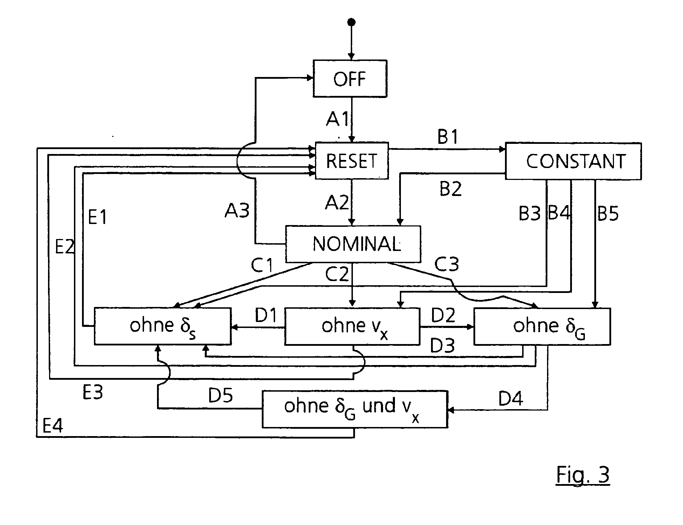

In Fig. 3 ist eine Statusmaschine mit Zuständen und Transitionen zur Konfiguration einer variablen Lenkübersetzung, d. h. um diese geeignet zu schalten und in entsprechende Ersatzmodi/-zustände zu überführen, dargestellt. Diese wird von einem als Computerprogramm auf dem Steuergerät 27 implementierten Verfahren zum Betrieb des Lenksystems im Rahmen eines Sicherheitsüberwachungsverfahrens eingesetzt.

Darin werden neben den Standardzuständen "off" (Aus), "reset" (Wiederherstellen) und "nominal" (Standard) noch weitere definiert. Der Nominalzustand "nominal" verwendet als Eingangssignale den Lenkradwinkel $\delta_S$, den Ritzelwinkel $\delta_G$ und die Fahrzeuggeschwindigkeit $V_X$. Falls eines oder mehrere dieser Eingangssignale fehlerhaft ist/sind (über Sicherheitsfunktionen feststellbar), werden geeignete Alternativzustände geschaltet. Diese sind "ohne $\delta_S$" "ohne $\delta_G$", "ohne $V_X$" und "ohne $\delta_G$ und $V_X$". Zusätzlich ist, wie aus Figur 3 ersichtlich, ein "constant"-Zustand für Entwicklungszwecke vorgesehen.

Falls mehrere Fehler gleichzeitig auftreten sollten, wird der Fehlerzustand "ohne $\delta_S$" als am relevantesten eingestuft und mit der höchsten Priorität versehen, da dann noch nicht einmal bekannt ist, in welche Richtung der Fahrer überhaupt lenken möchte.

Die Initialisierung der Statusmaschine erfolgt immer am Eingang.

A-Transitionen A1 bis A3 bezeichnen die Standardroute vom Eingang über "reset" nach "nominal" und schließlich zu "off". B-Transitionen B1 bis B5 beschreiben ein Umschalten in den Entwicklungsmodus "constant" und zurück. C-Transitionen C1 bis C3 degradieren den "nominal"-Zustand während D-Transitionen D1 bis D5 zwischen verschiedenen Fehlerzuständen umschalten. E-Transitionen E1 bis E4 überführen die Fehlerzustände "ohne $\delta_S$", "ohne $\delta_G$", "ohne $V_X$" und "ohne $\delta_G$ und $V_X$" schließlich wieder in den "reset"-Modus.

Die Transitionen werden bei den nachfolgenden Bedingungen geschaltet:

- A1: Die Funktion (variable Lenkübersetzung) wurde nicht durch eine übergeordnete Statusmaschine ausgeschaltet;
- A2: immer;
- A3: Die Funktion wurde durch eine übergeordnete Statusmaschine ausgeschaltet;
- B1: Die Funktion wurde durch eine übergeordnete Statusmaschine in den "constant"-Modus geschaltet;
- B2: Die Funktion wurde durch eine übergeordnete Statusmaschine geschaltet und alle drei Signalzustände $\delta_S$, $\delta_G$ und $V_X$ sind in Ordnung;
- B3: Die Funktion wurde durch eine übergeordnete Statusmaschine geschaltet und der Signalzustand $\delta_S$ ist in Ordnung;
- B4: Die Funktion wurde durch eine übergeordnete Statusmaschine geschaltet und der Signalzustand $\delta_G$ ist in Ordnung;
- B5: Die Funktion wurde durch eine übergeordnete Statusmaschine geschaltet und der Signalzustand $V_X$ ist in Ordnung;
- C1: Signalzustand $\delta_S$ ist nicht in Ordnung;
- C2: Signalzustand $V_X$ ist nicht in Ordnung;
- C3: Signalzustand $\delta_G$ ist nicht in Ordnung;
- D1: Signalzustand $\delta_S$ ist nicht in Ordnung;
- D2: Signalzustand $\delta_G$ ist nicht in Ordnung;
- D3: Signalzustand $\delta_S$ ist nicht in Ordnung;
- D4: Signalzustand $V_X$ ist nicht in Ordnung;
- D5: Signalzustand $\delta_S$ ist nicht in Ordnung;
- E1: alle drei Signalzustände $\delta_S$, $\delta_G$ und $V_X$ sind in Ordnung;
- E2: alle drei Signalzustände $\delta_S$, $\delta_G$ und $V_X$ sind in Ordnung;
- E3: alle drei Signalzustände $\delta_S$, $\delta_G$ und $V_X$ sind in Ordnung; und
- E4: alle drei Signalzustände $\delta_S$, $\delta_G$ und $V_X$ sind in Ordnung.

Transition B1 hat Priorität gegenüber A2. A1 > C1 > C2 > C3 lautet die Prioritäten, wenn der "nominal"-Zustand verlassen wird. B3 > B4 > B5 lauten die Prioritäten, wenn der "constant"-Zustand verlassen wird (die verbleibenden Bedingungen schließen sich gegenseitig aus). Die Transition D1 hat Priorität gegenüber D2. Die Transition D3 hat Priorität gegenüber D4 (E2 ist von diesen unabhängig).

In weiteren Ausführungsbeispielen könnten auch Alternativzustände wie "niedrige Bordnetzspannung", "ohne Gierrate", "ohne Längsbeschleunigung" und/oder "ohne Querbeschleunigung" nebst zugehörigen Transitionen in der Statusmaschine berücksichtigt werden, sofern diese Eingangssignale relevant wären.

Ebenfalls könnte in einem weiteren Ausführungsbeispiel vorgesehen sein, dass bei Vorliegen eines fehlerhaften Eingangssignals ein vordefiniertes stetiges Ersatzsignal verwendet wird und/oder bei erneut plausibel gewordenem Eingangssignal auf dieses wieder stetig umgeschaltet wird. Dadurch werden Unstetigkeiten bei den einzustellenden Soll-Motorwinkeln vermieden. Sichere vordefinierte Ersatzsignale werden für die fehlerhaften Signale glatt angefahren und andersherum werden bei erneuter Plausibilität der aktuellen Eingangssignale, diese ebenfalls erneut glatt angefahren. Dazu könnten im Vorfeld stetige Sollwerte für die Motorregelung erzeugt werden, auf welche dann entsprechend zurückgegriffen wird.

Bezugszeichen

| | |
|---|---|
| 11 | Lenkrad |
| 12 | Überlagerungsgetriebe |
| 13 | Stellantrieb |
| 14 | Lenkgetriebe |
| 15a | Räder |
| 15b | Räder |
| 16 | Lenkgestänge |
| | |
| 21 | Lenkrad |
| 22 | Überlagerungsgetriebe |
| 23 | Stellantrieb |
| 24 | Lenkgetriebe |
| 25 | - |
| 26 | Sensoren |
| 27 | Steuergerät |
| 28 | Sensoren |
| | |
| 101 | Verbindung |
| 102 | Verbindung |
| 103 | Verbindung |

104 Verbindung

| | |
|---|---|
| $\delta_S$ | Lenkradwinkel |
| $\delta_M$ | Motorwinkel |
| $\delta_G$ | Ritzelwinkel |
| $\delta_{Fm}$ | Lenkwinkel |
| $V_X$ | Fahrzeuggeschwindigkeit |
| $i_\ddot{U}$ | mech. Übersetzung des Überlagerungsgetriebes |
| $i_L$ | mech. Übersetzung des Lenkgetriebes |
| $M_V$ | Reaktionsmoment |
| $M_L$ | Lenkradmoment |

| | |
|---|---|
| A1-A3 | Transitionen |
| B1-B5 | Transitionen |
| C1-C3 | Transitionen |
| D1-D5 | Transitionen |
| E1-E4 | Transitionen |

| | |
|---|---|
| "off" | Aus-Zustand |
| "reset" | Wiederherstellen-Zustand |
| "nominal" | Standardzustand |
| "constant" | Entwicklungszustand |
| "ohne $\delta_G$" | Zustand "ohne Ritzelwinkel" |
| "ohne $\delta_S$" | Zustand "ohne Lenkradwinkel" |
| "ohne $V_X$" | Zustand "ohne Fahrzeuggeschwindigkeit" |
| "ohne $\delta_S$ und $v_X$" | Zustand "ohne Lenkradwinkel und Fahrzeuggeschwindigkeit" |

## Patentansprüche

1. Verfahren zum Betrieb eines Lenksystems für ein Kraftfahrzeug mit wenigstens einem lenkbaren Rad (15a, 15b), einem Stellantrieb (13;23) und einem Überlagerungsgetriebe (12;22), wobei durch das Überlagerungsgetriebe (12;22) die durch den Fahrer des Fahrzeugs initiierte Lenkbewegung ($\delta_S$) und die durch den Stellantrieb (13;23) initiierte Bewegung ($\delta_M$) zur Erzeugung der Lenkbewegung des lenkbaren Rades ($\delta_{Fm}$) zur Realisierung von Nutzanwendungen in einen Ritzelwinkel ($\delta_G$) überlagert werden, wobei

- der Stellantrieb (13;23) zur Initiierung der Bewegung ($\delta_M$) durch ein Steuersignal (u) eines Steuergeräts (27) angesteuert wird und
- das Steuergerät (27) zur Ermittlung des Steuersignals (u) den Lenkradwinkel ($\delta_S$), den Ritzelwinkel ($\delta_G$) und weitere fahrzeugspezifische Parameter, insbesondere eine Fahrzeuggeschwindigkeit ($v_X$) als Eingangssignale erhält,

**dadurch gekennzeichnet, dass** die Eingangssignale ($v_X$, $\delta_G$, $\delta_S$) des Steuergeräts (27), insbesondere mittels Sicherheitsfunktionen eines Sicherheitsüberwachungsverfahrens, auf Plausibilität überprüft werden und anhand der Ergebnisse die Nutzanwendungen des Lenksystems konfiguriert werden, wobei die Nutzanwendungen, wenn eines oder mehrere Eingangssignale fehlerhaft sind, in geeignete Ersatzmodi überführt werden, und wobei die Nutzanwendungen wieder in deren normale Betriebsmodi überführt werden, sobald alle Eingangssignale fehlerfrei sind.

2. Verfahren nach Anspruch 1,
**dadurch gekennzeichnet, dass**
zur Konfiguration der Nutzanwendungen Ersatzmodi und Umschaltbedingungen vorgegeben werden.

3. Verfahren nach Anspruch 1 oder 2,
**dadurch gekennzeichnet, dass**
zur Konfiguration der Nutzanwendungen wenigstens zwei unterschiedliche Ersatzmodi vorgegeben werden.

4. Verfahren nach Anspruch 2 oder 3,
**dadurch gekennzeichnet, dass**
die Vorgabe der Ersatzmodi und Umschaltbedingungen durch eine Statusmaschine implementiert wird.

5. Verfahren nach einem der Ansprüche 1 bis 4,
**dadurch gekennzeichnet, dass**
als Nutzanwendung eine variable Lenkübersetzung eingesetzt wird.

6. Verfahren nach Anspruch 5,
**dadurch gekennzeichnet, dass**
die variable Lenkübersetzung wenigstens anhand der Eingangssignale Lenkradwinkel ($\delta_S$), Ritzelwinkel ($\delta_G$) und Fahrzeuggeschwindigkeit ($v_X$) konfiguriert wird.

7. Verfahren nach einem der Ansprüche 1 bis 6,
**dadurch gekennzeichnet, dass**
bei Vorliegen eines fehlerhaften Eingangssignals ein vordefiniertes stetiges Ersatzsignal verwendet wird und/oder bei erneut plausibel gewordenem Eingangssignal auf dieses wieder stetig umgeschaltet wird.

8. Computerprogramm mit Programmcodemitteln, um ein Verfahren gemäß einem der Ansprüche 1 bis 7 durchzuführen, wenn das Programm auf einem Computer insbesondere auf dem Steuergerät (27) des Lenksystems ausgeführt wird.

9. Steuergerät (27) für ein Lenksystem zur Ausführung eines Computerprogramms gemäß Anspruch 8.

## Claims

1. Method for operating a steering system for a motor vehicle having at least one steerable wheel (15a, 15b), an actuator drive (13; 23) and a superimposition gear mechanism (12; 22), wherein, in order to implement user applications, the superimposition gear mechanism (12; 22) superimposes the steering movement ($\delta_S$) initiated by the driver of the vehicle and the movement ($\delta_M$) initiated by the actuator drive (13; 23) for generating the steering movement of the steerable wheel ($\delta_{Fm}$), into a pinion angle ($\delta_G$), wherein

- the actuator drive (13; 23) for initiating the movement ($\delta_M$) is actuated by a control signal (u) of a control unit (27), and
- the control unit (27) receives, for the purpose of determining the control signal (u), the steering wheel angle ($\delta_S$), the pinion angle ($\delta_G$) and further vehicle-specific parameters, in particular a vehicle velocity ($v_X$) as input signals,

**characterized in that** the input signals ($v_X$, $\delta_G$, $\delta_S$) of the control unit (27) are checked for plausibility in particular by means of safety functions of a safety monitoring method, and the user applications of the steering system are configured on the basis of the results, wherein the user applications are converted into suitable standby modes if one or more input signals are faulty, and wherein the user applications are converted again into their normal operating modes as soon as all the input signals are fault free.

2. Method according to Claim 1, **characterized in that** standby modes and switch-over conditions are predefined for the configuration of the user applications.

3. Method according to Claim 1 or 2, **characterized in that** at least two different standby modes are predefined for the configuration of the user applications.

4. Method according to Claim 2 or 3, **characterized in that** the predefinition of the standby modes and switch-over conditions is implemented by means of a status machine.

5. Method according to one of Claims 1 to 4, **characterized in that** a variable steering transmission ratio is used as a user application.

6. Method according to Claim 5, **characterized in that** the variable steering transmission ratio is configured at least by means of the input signals for the steering wheel angle ($\delta_S$), pinion angle ($\delta_G$) and vehicle velocity ($v_X$).

7. Method according to one of Claims 1 to 6, **characterized in that**, when a faulty input signal is present, a predefined, continuous standby signal is used and/or, when an input signal which has become plausible again is present, the system is switched over again to said signal on a continuous basis.

8. Computer program having program code means in order to carry out a method according to one of Claims 1 to 7 if the program is executed on a computer, in particular on the control unit (27) of the steering system.

9. Control unit (27) for a steering system for carrying out a computer program according to Claim 8.

## Revendications

1. Procédé pour actionner un système de direction pour un véhicule automobile avec au moins une roue directrice (15a, 15b), un actionneur (13 ; 23) et une transmission de superposition (12 ; 22), dans lequel la transmission de superposition (12 ; 22) permet de superposer le mouvement de braquage ($\delta_S$) à l'initiative du conducteur du véhicule et le mouvement ($\delta_M$) à l'initiative de l'actionneur (13; 23) pour obtenir le mouvement de braquage ($\delta_{Fm}$) de la roue directrice pour la réalisation d'applications par l'intermédiaire d'un angle de pignon ($\delta_G$), dans lequel

- l'actionneur (13 ; 23) à l'origine du mouvement ($\delta_M$) est commandé par un signal de commande (u) d'un dispositif de commande (27) et
- le dispositif de commande (27) reçoit comme signaux d'entrée, 1'angle de braquage ($\delta_S$) du volant, l'angle du pignon ($\delta_G$) et d'autres paramètres spécifiques du véhicule notamment une vitesse du véhicule ($v_X$) pour déterminer le signal de commande (u), **caractérisé en ce qu'**on vérifie la vraisemblance des signaux d'entrée ($v_X$, $\delta_G$, $\delta_S$) du dispositif de commande (27), notamment au moyen de fonctions de sécurité d'un procédé de surveillance de sécurité, et qu'on configure les applications du système de direction à la lumière des résultats, les applications étant transférées dans des modes de remplacement appropriés lorsqu'un ou plusieurs signaux d'entrée sont défectueux, et les applications étant à nouveau transférées dans leurs modes d'action normaux dès que tous les signaux d'entrée sont sans défauts.

2. Procédé selon la revendication 1, **caractérisé en ce qu'**on définit des modes de remplacement et des conditions de commutation pour la configuration des applications.

3. Procédé selon la revendication 1 ou 2, **caractérisé en ce qu'**on définit au moins deux modes de remplacement différents pour la configuration des applications.

**4.** Procédé selon la revendication 2 ou 3, **caractérisé en ce que** la définition des modes de remplacement et des conditions de commutation est implémentée par une machine d'états.

**5.** Procédé selon une des revendications 1 à 4, **caractérisé en ce qu'**on met en oeuvre une transmission de direction à rapport variable comme application.

**6.** Procédé selon la revendication 5, **caractérisé en ce qu'**on configure la transmission de direction à rapport variable au moins à l'aide des signaux d'entrée de l'angle de braquage ($\delta_S$) du volant, de l'angle du pignon ($\delta_G$) et de la vitesse du véhicule ($v_x$).

**7.** Procédé selon une des revendications 1 à 6, **caractérisé en ce que** dans le cas de l'existence d'un signal d'entrée défectueux, on utilise un signal de remplacement continu prédéfini et/ou lorsque le signal d'entrée est redevenu vraisemblable, on commute à nouveau en continu sur celui-ci.

**8.** Programme d'ordinateur avec des moyens de codes de programmes pour exécuter un procédé selon une des revendications 1 à 7 lorsque le programme est exécuté sur un ordinateur notamment sur le dispositif de commande (27) du système de direction.

**9.** Dispositif de commande (27) pour un système de direction pour exécuter un programme d'ordinateur selon la revendication 8.

Fig. 1

EP 1 568 575 B1

Fig. 2

Fig. 3

**IN DER BESCHREIBUNG AUFGEFÜHRTE DOKUMENTE**

**In der Beschreibung aufgeführte Patentdokumente**

- DE 19751125 A1